# EUROPÄISCHE PATENTSCHRIFT

(11) **EP 3 792 534 B1**
(45) Veröffentlichungstag und Bekanntmachung des Hinweises auf die Patenterteilung: **26.07.2023**
(21) Anmeldenummer: 20194115.0
(22) Anmeldetag: 02.09.2020
(51) Int. Cl.: F16K 21/12, F16K 21/14, E03C 1/042, F16K 11/074, F16K 31/385, F16K 21/10

(54) **SELBSTSCHLUSSVENTILVORRICHTUNG**
SELF-CLOSING VALVE
DISPOSITIF DE SOUPAPE À FERMETURE AUTOMATIQUE

(30) Priorität: 12.09.2019 DE 102019213943
(43) Veröffentlichungstag der Anmeldung: 17.03.2021
(73) Patentinhaber: Hansgrohe SE, 77761 Schiltach (DE)
(72) Erfinder: Dold, Florian, 77716 Hofstetten (DE); Meier, Fridolin, 77709 Oberwolfach (DE)
(74) Vertreter: Patentanwälte Ruff, Wilhelm, Beier, Dauster & Partner mbB

(56) Entgegenhaltungen:
- CH-A- 315 544
- FR-A1- 2 713 735
- JP-A- S5 380 018
- US-A- 3 842 857
- US-A- 4 522 226

## Beschreibung

Die Erfindung bezieht sich auf eine Selbstschlussventilvorrichtung nach dem Oberbegriff des Anspruchs 1.

Eine derartige Selbstschlussventilvorrichtung umfasst eine Ventilschließkörpereinheit, die in einer Normalbetriebsart der Selbstschlussventilvorrichtung zwischen einer Ventilschließstellung und einer Normalbetrieb-Ventiloffenstellung beweglich angeordnet ist, und eine Ventilbetätigungseinheit, die in einer stationären Schließstellung die Ventilschließkörpereinheit in deren Ventilschließstellung hält und in einer temporären Öffnungsstellung die Ventilschließkörpereinheit in der Normalbetrieb-Ventiloffenstellung hält, wobei die Ventilbetätigungseinheit nutzerbetätigt von ihrer stationären Schließstellung in ihre temporäre Öffnungsstellung und selbsttätig von ihrer temporären Öffnungsstellung in ihre stationäre Schließstellung gelangt.

Selbstschlussventilvorrichtungen zeichnen sich dadurch aus, dass sie in einem normalen Betrieb, d.h. in einer Normalbetriebsart, selbsttätig schließen, d.h. ihre stationäre Schließstellung selbsttätig einnehmen, ohne dass der Benutzer dazu das Ventil betätigen muss. Dementsprechend werden derartige Ventilvorrichtungen typischerweise in Anwendungen eingesetzt, bei denen automatisch dafür gesorgt werden soll, dass durch die Ventilvorrichtung ein von ihr in seiner Fluiddurchflussmenge regulierter Fluidweg selbsttätig wieder geschlossen wird, ohne dass es dazu einer Schließbetätigung durch den Benutzer bedarf, nachdem der Benutzer zuvor die Ventilvorrichtung in ihre Offenstellung gebracht hat. Derartige Selbstschlussventilvorrichtungen werden beispielsweise in sanitären Anwendungen als reine Absperrventilvorrichtungen zum wahlweisen Absperren oder Durchlassen eines Fluids, insbesondere Wasser, oder als Misch- und Absperrventilvorrichtungen zum kontrollierten Mischen zweier Fluide, wie Kaltwasser und Warmwasser, und kontrollierten Abgeben eines entsprechenden Mischfluids verwendet.

Mit dem Begriff Ventilschließstellung ist vorliegend die geschlossene Stellung der Ventilschließkörpereinheit und damit der Selbstschlussventilvorrichtung insgesamt gemeint, in der die Ventilschließkörpereinheit und damit die Selbstschlussventilvorrichtung insgesamt die Abgabe von eingangsseitig zuführbarem Fluid absperrt, d.h. an einem entsprechenden Fluidauslauf kein Fluid abgibt. Mit dem Begriff Ventiloffenstellung ist vorliegend eine Stellung der Ventilschließkörpereinheit und damit der Selbstschlussventilvorrichtung insgesamt gemeint, in der die Ventilschließkörpereinheit und damit die Selbstschlussventilvorrichtung insgesamt den von ihr in ihrem Durchlassquerschnitt bzw. ihrer Fluiddurchlassmenge regulierbaren Fluidströmungsweg wenigstens teilweise, d.h. vollständig oder teilweise, offen hält. Mit anderen Worten umfasst vorliegend der Begriff Offenstellung bzw. Ventiloffenstellung jegliche wenigstens teilgeöffnete Stellung der Ventilschließkörpereinheit bzw. der Selbstschlussventilvorrichtung, sei es die Volloffenstellung mit voll geöffnetem Fluidströmungsweg oder eine beliebige Teiloffenstellung mit nur teilgeöffnetem Fluidströmungsweg.

Mit dem Begriff stationäre Schließstellung ist vorliegend eine bleibende, andauernde Schließstellung der Ventilbetätigungseinheit gemeint, in der die Ventilbetätigungseinheit bleibt, solange sie vom Benutzer nicht in eine andere Stellung verbracht wird. Solange sich die Ventilbetätigungseinheit in ihrer Schließstellung befindet, befindet sich entsprechend die Ventilschließkörpereinheit und damit die Selbstschlussventilvorrichtung insgesamt in der Ventilschließstellung.

Mit dem Begriff temporäre Öffnungsstellung der Ventilbetätigungseinheit ist vorliegend gemeint, dass die Ventilbetätigungseinheit ohne Nutzerinteraktion nicht dauerhaft in ihrer Öffnungsstellung verbleibt, sondern nur temporär, d.h. zeitweise, für eine gewisse, vorzugsweise definiert vorgegebene Zeitdauer, nach deren Ablauf die Ventilbetätigungseinheit selbsttätig von ihrer temporären Öffnungsstellung in ihre stationäre Schließstellung gelangt, entsprechend der Selbstschlussfunktionalität der Selbstschlussventilvorrichtung. Dementsprechend gelangt die Ventilschließkörpereinheit und damit die Selbstschlussventilvorrichtung insgesamt in dieser Normalbetriebsart, nachdem sie vom Benutzer aus ihrer Ventilschließstellung in ihre Ventiloffenstellung gebracht wurde, ohne Nutzerinteraktion selbsttätig wieder in ihre Ventilschließstellung zurück.

Selbstschlussventilvorrichtungen mit einer derartigen Ventilschließkörpereinheit und Ventilbetätigungseinheit in der Ausführung vom erwähnten Misch- und Absperrventiltyp sind in den Offenlegungsschriften DE 102014 113 386 A1 und EP 2 998 623 A1 offenbart. Selbstschlussventilvorrichtungen dieser Art in der Ausführung vom erwähnten reinen Absperrventiltyp sind in den Offenlegungsschriften DE 38 35 497 A1 und DE 10 2007 011 199 A1 sowie in der Patentschrift DE 43 22 289 C1 und der älteren Patentanmeldung DE 10 2018 204 147.4 der Anmelderin offenbart.

Die vorliegende Selbstschlussventilvorrichtung weist zusätzlich eine nutzerbetätigte Verstelleinheit auf, die zur Verstellung der Ventilbetätigungseinheit in einer Sonderbetriebsart der Selbstschlussventilvorrichtung von ihrer stationären Schließstellung in eine stationäre Sonderbetriebsstellung eingerichtet ist, in der die Ventilbetätigungseinheit die Ventilschließkörpereinheit in einer Sonderbetrieb-Ventiloffenstellung hält.

Aufgrund dieses zusätzlichen Merkmals besitzt die Selbstschlussventilvorrichtung eine gegenüber dem oben erläuterten Stand der Technik erweiterte Funktionalität. Insbesondere ist bei dieser Selbstschlussventilvorrichtung die Fähigkeit, im Normalbetrieb selbsttätig aus ihrer temporären Offenstellung in ihre stationäre Schließstellung zu gelangen, mit der Fähigkeit kombiniert, bei Bedarf in einer Sonderbetriebsart betrieben werden zu können, in der sie eine Offenstellung beibehält. Dazu hält die Ventilbetätigungseinheit in dieser Sonderbetriebsart die Ventilschließkörpereinheit in der entsprechenden Sonderbetrieb-Ventiloffenstellung. Bei der Sonderbetrieb-Ventiloffenstellung kann es sich vorzugsweise um eine Volloffenstellung der Ventilvorrichtung handeln, alternativ um eine Teiloffenstellung.

Durch entsprechende Betätigung der Verstelleinheit kann der Benutzer die Ventilbetätigungseinheit aus ihrer stationären Schließstellung heraus in die stationäre Sonderbetriebsstellung verstellen und dadurch die entsprechende Sonderbetriebsart aktivieren, indem die Ventilbetätigungseinheit dann die Ventilschließkörpereinheit in der Sonderbetrieb-Ventiloffenstellung hält, was bedeutet, dass die Ventilschließkörpereinheit ihre Ventiloffenstellung beibehält, solange der Benutzer keine anderweitige Ventilbetätigung vornimmt. In der Sonderbetrieb-Ventiloffenstellung der Ventilschließkörpereinheit befindet sich entsprechend die Selbstschlussventilvorrichtung stationär, d.h. bleibend, in ihrer Offenstellung, bei der es sich je nach Bedarf und Anwendungsfall um die Volloffenstellung oder eine Teiloffenstellung handeln kann.

Diese Zusatzfunktionalität ist insbesondere für Anwendungen von Vorteil, bei denen in einer bestimmten Anwendungssituation gewünscht ist, dass die Ventilvorrichtung entgegen ihrer grundsätzlichen Selbstschlussfunktionalität ihre Offenstellung stationär beibehält, bis sie vom Benutzer wieder in den Normalbetrieb zurückgestellt wird, in welchem sie gemäß ihrer Selbstschlussfunktionalität selbsttätig aus ihrer Offenstellung in ihre Schließstellung gelangt. Als eine nützliche Anwendung ermöglicht diese Zusatzfunktionalität in der Sonderbetriebsart eine bleibende Abgabe des von der Ventilvorrichtung in ihrer Abgabemenge regulierten Fluids, ohne dass die Ventilvorrichtung in diesem Fall die Fluidabgabe aufgrund ihrer grundsätzlichen Selbstschlussfunktionalität nach einer gewissen Zeitdauer selbsttätig wieder absperrt.

Speziell in Verwendung als sanitäre Misch- und Absperrventilvorrichtung vom Selbstschlussventiltyp ergibt sich eine nützliche Anwendung dieser Zusatzfunktionalität für die sogenannte thermische Desinfektion von Sanitärarmaturen, wie sanitären Auslaufarmaturen an Waschtischen, Küchenspülen und Duscheinrichtungen. Bei dieser thermischen Desinfektion ist z.B. für sanitäre Wasserauslaufarmaturen in öffentlichen Einrichtungen ein Durchspülen der Auslaufarmatur mit zugeführtem Warmwasser, vorzugsweise ohne Zumischung von Kaltwasser, für einen ausreichend langen Zeitraum gefordert. Dieser Zeitraum ist typischerweise länger als der Verzögerungszeitraum des Selbstschlussvorgangs gängiger Selbstschlussventile, die daher das Warmwasser für diesen Zweck der thermischen Desinfektion nicht lange genug in der geforderten Menge durchlassen.

Bei der vorliegenden Selbstschlussventilvorrichtung beinhaltet die Ventilbetätigungseinheit ein Betätigungsglied, das zwischen einer ersten Öffnungslage, die es einnimmt, wenn sich die Ventilbetätigungseinheit in ihrer temporären Öffnungsstellung befindet, und einer Kopplungsschließlage beweglich angeordnet ist, die es einnimmt, wenn sich die Ventilbetätigungseinheit in ihrer stationären Schließstellung befindet. Die Verstellung der Ventilbetätigungseinheit in ihre stationäre Sonderbetriebsstellung durch die Verstelleinheit in der Sonderbetriebsart der Selbstschlussventilvorrichtung beinhaltet in diesem Fall eine Verstellung des Betätigungsglieds von der Kopplungsschließlage in eine zweite Öffnungslage.

Im Normalbetrieb hält die Ventilbetätigungseinheit mittels ihres in der Kopplungsschließlage befindlichen Betätigungsglieds die Ventilschließkörpereinheit in deren Ventilschließstellung. Wenn der Benutzer die Ventilbetätigungseinheit in ihre temporäre Öffnungsstellung verbringt, gelangt das Betätigungsglied in seine erste Öffnungslage und gibt in dieser die Ventiloffenstellung für die Ventilschließkörpereinheit temporär für die vorgegebene Zeitdauer frei, wonach sie selbsttätig wieder in ihre Kopplungsschließlage gelangt und die Ventilschließkörpereinheit in ihre Schließstellung verbringt.

In der Sonderbetriebsart verbringt der Benutzer durch entsprechende Verstellung der Ventilbetätigungseinheit das Betätigungsglied in dessen von der ersten verschiedene zweite Öffnungslage, die es nicht nur temporär, sondern andauernd beibehält, entsprechend der Tatsache, dass sich die Ventilbetätigungseinheit dann in ihrer stationären Sonderbetriebsstellung befindet.

Eine Selbstschlussventilvorrichtung der eingangs genannten Art ist in der Offenlegungsschrift JP S53-80018 A offenbart. Dort fungiert ein Fußschalterventil in Verbindung mit einem Druckkolben, der starr mit einer Ventilschließkörpereinheit verbunden ist, als eine Ventilbetätigungseinheit. Als nutzerbetätigte Verstelleinheit fungiert ein axialer Bolzen, der mit einem anderen Betätigungsteil, das einteilig mit der Ventilschließkörpereinheit gebildet ist, derart zusammenwirkt, dass die Ventilschließkörpereinheit zwangsweise aus ihrer stationären Schließstellung heraus in eine stationäre Sonderbetrieb-Ventiloffenstellung gebracht werden kann, wobei sich der Druckkolben dann in der gleichen Öffnungslage befindet wie in der temporären Öffnungsstellung.

Weitere herkömmliche Selbstschlussventilvorrichtungen sind in den Patentschriften US 4.522.226, CH 315544 und US 3.842.857 sowie der Offenlegungsschrift FR 2 713 735 A1 offenbart.

Der Erfindung liegt als technisches Problem die Bereitstellung einer Selbstschlussventilvorrichtung der eingangs genannten Art zugrunde, die in ihrer Funktionalität gegenüber dem oben erläuterten Stand der Technik erweitert ist.

Die Erfindung löst dieses Problem durch die Bereitstellung einer Selbstschlussventilvorrichtung mit den Merkmalen des Anspruchs 1. Vorteilhafte Weiterbildungen der Erfindung sind in den Unteransprüchen angegeben, deren Wortlaut hiermit durch Verweis in die Beschreibung aufgenommen ist.

Erfindungsgemäß beinhaltet bei dieser Selbstschlussventilvorrichtung die Ventilbetätigungseinheit eine Hydraulikdämpfereinheit, die einen nutzerbetätigt axialbeweglich angeordneten Hydraulikzylinder und einen Verdrängerkolben umfasst. Der Hydraulikzylinder weist einen Kolbenraum auf, in welchem der Verdrängerkolben zwischen einer stationären, d.h. bleibenden, Kolbenendlage und einer instationären, d.h. temporären, Kolbenendlage beweglich angeordnet ist. Das Betätigungsglied ist mit dem Verdrängerkolben bewegungsgekoppelt, und der Verdrängerkolben unterteilt den Kolbenraum in zwei Halbräume. Die Hydraulikdämpfereinheit umfasst des Weiteren eine Hydraulikfluid-Durchlassverbindung zwischen den beiden Halbräumen, die bei Bewegung des Verdrängerkolbens in Richtung seiner instationären Kolbenendlage öffnet und bei Bewegung des Verdrängerkolbens in Richtung seiner stationären Kolbenendlage schließt. Außerdem beinhaltet die Hydraulikdämpfereinheit eine mindestens bei Bewegung des Verdrängerkolbens in Richtung seiner stationären Kolbenendlage offene Hydraulikfluid-Drosselverbindung zwischen den beiden Halbräumen. Dies stellt eine konstruktiv und funktionell vorteilhafte Realisierung der Ventilbetätigungseinheit dar. Derartige hydraulische Realisierungen dieses Teils der Ventilbetätigungseinheit sind beispielsweise aus dem oben erwähnten Stand der Technik an sich bekannt, worauf für entsprechende Details verwiesen werden kann, siehe insbesondere auch die oben erwähnte ältere Patentanmeldung DE 10 2018 204 147.4 der Anmelderin. In alternativen Ausführungen kann die Ventilbetätigungseinheit statt einer solchen hydraulischen Ausführung nicht-hydraulisch ausgeführt sein, z.B. in einer der aus dem Stand der Technik von Selbstschlussventilvorrichtungen an sich bekannten Art, was den Normalbetrieb-Komponententeil der Ventilbetätigungseinheit betrifft.

In einer Weiterbildung der Erfindung weist die Ventilbetätigungseinheit eine Vorspanneinheit auf, welche die Ventilschließkörpereinheit von ihrer Ventilschließstellung in ihre Normalbetrieb-Ventiloffenstellung durch einen Fluiddruck und/oder durch ein elastisches Vorspannelement vorspannt, und das Betätigungsglied ist unidirektional mit der Ventilschließkörpereinheit in Richtung zu deren Ventilschließstellung hin längs eines Kopplungshubs von einer öffnungsseitigen Endlage zu der Kopplungsschließlage als einer schließseitige Endlage bewegungsgekoppelt. Dies bedeutet, dass das Betätigungsglied, während es sich von seiner öffnungsseitigen Endlage in seine schließseitige Endlage bewegt, die Ventilschließkörpereinheit aktiv in deren Ventilschließstellung bringt, während die Kraft für das Herausbewegen der Ventilschließkörpereinheit aus ihrer Ventilschließstellung nicht vom Betätigungsglied übertragen wird, sondern von der Vorspanneinheit bereitgestellt wird, wobei das Betätigungsglied dieses Herausbewegen der Ventilschließkörpereinheit aus ihrer Ventilschließstellung freigibt, indem es seine entsprechende Öffnungslage einnimmt. In alternativen Ausführungen ist das Betätigungsglied bidirektional mit der Ventilschließkörpereinheit sowohl in Richtung zu deren Ventilschließstellung hin als auch in Richtung aus deren Ventilschließstellung heraus bewegungsgekoppelt.

In einer Weiterbildung der Erfindung beinhaltet die Verstelleinheit eine verstellbewegliche Ankopplung des Betätigungsglieds an den Hydraulikzylinder. Dies stellt eine konstruktiv und handhabungstechnisch vorteilhafte Realisierung der Verstelleinheit dar, wenn die Ventilbetätigungseinheit die erwähnte Hydraulikdämpfereinheit umfasst. In alternativen Ausführungen ist die Verstelleinheit andersartig realisiert, z.B. unter Benutzung eines weiteren Betätigungsglieds zur Ausführung der in der Sonderbetriebsart geforderten Funktionalität der Verstelleinheit.

In einer Ausgestaltung der Erfindung beinhaltet der Hydraulikzylinder einen Außenzylinder und einen in dem Außenzylinder koaxial und axial gegenüber diesem verstellbeweglich gehaltenen Verstellzylinder. Dies stellt weiterführend eine vorteilhafte Realisierung der Verstelleinheit dar, mit der das Betätigungsglied z.B. gegenüber dem Außenzylinder axial verstellt werden kann, wenn es mit dem Verstellzylinder gekoppelt ist, bzw. alternativ gegenüber dem Verstellzylinder axial verstellt werden kann, wenn es mit dem Außenzylinder gekoppelt ist. Der Verstellzylinder kann z.B. direkt über eine Schraubverbindung an den Außenzylinder angekoppelt sein oder in einer alternativen Ausführung über eine Stellschraube, gegen die der Verstellzylinder vorgespannt anliegt und die ihrerseits über eine Schraubverbindung an den Außenzylinder angekoppelt ist. Alternativ sind andere, herkömmliche, verstellbewegliche Ankopplungsmechanismen für die Ankopplung des Betätigungsglieds an den Hydraulikzylinder verwendbar.

In einer Weiterbildung der Erfindung weist das Betätigungsglied einen Leerhub zwischen seiner ersten Öffnungslage und der öffnungsseitigen Endlage seines Kopplungshubs auf. Dadurch lässt sich auf Wunsch vorteilhaft die Zeitverzögerung für die selbsttätige Selbstschlussfunktion der Ventilvorrichtung größer wählen als eine Zeitdauer, welche die Ventilschließkörpereinheit benötigt, um von ihrer temporären Offenstellung in ihre stationäre Schließstellung zu gelangen. Denn in diesem Fall legt das Betätigungsglied zunächst den Leerhub zurück, bevor es dann im weiteren Bewegungsablauf die Ventilschließkörpereinheit mitnimmt. In alternativen Ausführungen arbeitet die Ventilvorrichtung ohne einen solchen Leerhub, wodurch dann die Ventilschließkörpereinheit unverzögert dem Betätigungsglied folgt.

In einer Weiterbildung der Erfindung umfasst die Ventilschließkörpereinheit einen Membranventilkörper mit magnetbetätigter Pilotventilvorsteuerung, wobei ein zugehöriger Magnet von einer Magnethalterung gehalten ist, die eine Anschlagfläche für das Betätigungsglied aufweist. Auf diese Weise lässt sich die Selbstschlussventilvorrichtung durch einen an sich bekannten Membranventiltyp mit magnetbetätigter Vorsteuerung in Kombination mit der Selbstschlussfunktion bereitstellen. Derartige Realisierungen dieses Teils der Ventilbetätigungseinheit sind beispielsweise aus dem oben erwähnten Stand der Technik an sich bekannt, worauf für entsprechende Details verwiesen werden kann, siehe insbesondere auch die oben erwähnte ältere Patentanmeldung DE 10 2018 204 147.4 der Anmelderin. In alternativen Ausführungen ist die Ventilschließkörpereinheit anderweitig realisiert, z.B. in an sich herkömmlichen Ausführungen ohne Pilotventilvorsteuerung.

In einer Weiterbildung der Erfindung beinhaltet die Selbstschlussventilvorrichtung eine Fluidmischeinheit, die zur Bildung eines Mischfluids durch Mischung zweier getrennt zugeführter Fluide in einem einstellbaren Mischungsverhältnis und zur Abgabe des Mischfluids eingerichtet ist, und die Ventilbetätigungseinheit umfasst eine nutzerbetätigte Mischbedieneinheit zur Einstellung des Mischungsverhältnisses. In dieser vorteilhaften Realisierung fungiert die Selbstschlussventilvorrichtung nicht nur als reines Absperrventil, sondern zusätzlich als Mischventil, d.h. sie bildet eine Misch- und Absperrventilvorrichtung vom Selbstschlussventiltyp. In alternativen Ausführungen ist die Selbstschlussventilvorrichtung als reine Absperrventilvorrichtung vom Selbstschlussventiltyp ausgeführt.

In einer Ausgestaltung der Erfindung beinhaltet die Fluidmischeinheit einen drehbeweglichen Ventilmischkörper, und die Mischbedieneinheit beinhaltet ein drehbewegliches Bedienelement, das drehfest mit dem drehbeweglichen Ventilmischkörper gekoppelt ist. Dies stellt eine vorteilhafte Realisierung für die Fluidmischeinheit und die Mischbedieneinheit dar. Der Benutzer kann das Mischungsverhältnis der zugeführten Fluide über eine Drehbewegung am drehbeweglichen Bedienelement einstellen, während er die Absperrfunktion z.B. durch eine axiale Bedienbewegung aktivieren kann.

Vorteilhafte Ausführungsformen der Erfindung sind in den Zeichnungen dargestellt. Diese und weitere vorteilhafte Ausführungsformen der Erfindung werden nachfolgend näher beschrieben. Hierbei zeigen:
- Fig. 1: eine Blockdiagrammdarstellung einer Selbstschlussventilvorrichtung in Ventilschließstellung,
- Fig. 2: die Ansicht von Fig. 1 mit der Selbstschlussventilvorrichtung in temporärer Normalbetrieb-Ventiloffenstellung,
- Fig. 3: die Ansicht von Fig. 1 mit der Selbstschlussventilvorrichtung in stationärer Sonderbetrieb-Ventiloffenstellung,
- Fig. 4: eine Blockdiagrammdarstellung entsprechend Fig. 1 mit der Selbstschlussventilvorrichtung in einer detaillierteren Realisierung,
- Fig. 5: die Ansicht von Fig. 4 mit der Selbstschlussventilvorrichtung in der temporären Normalbetrieb-Ventiloffenstellung entsprechend Fig. 2,
- Fig. 6: die Ansicht von Fig. 4 mit der Selbstschlussventilvorrichtung in der stationären Sonderbetrieb-Ventiloffenstellung entsprechend Fig. 3,
- Fig. 7: eine Längsschnittansicht einer sanitären Auslaufarmatur in einer Ausführung mit integrierter, als Misch- und Absperrventilvorrichtung ausgelegter Selbstschlussventilvorrichtung nach Art der Fig. 4 bis 6 in stationärer Schließstellung,
- Fig. 8: eine Längsschnittansicht der Selbstschlussventilvorrichtung von Fig. 7 in der stationären Schließstellung,
- Fig. 9: die Ansicht von Fig. 7 mit der Selbstschlussventilvorrichtung in der stationären Sonderbetrieb-Ventiloffenstellung,
- Fig. 10: die Ansicht von Fig. 8 mit der Selbstschlussventilvorrichtung in der stationären Sonderbetrieb-Ventiloffenstellung,
- Fig. 11: eine Längsschnittansicht entsprechend Fig. 8 eines Absperrventilteils einer Variante der Selbstschlussventilvorrichtung gemäß den Fig. 7 bis 10 und
- Fig. 12: eine Längsschnittansicht entsprechend Fig. 10 des Absperrventilteils von Fig. 11.

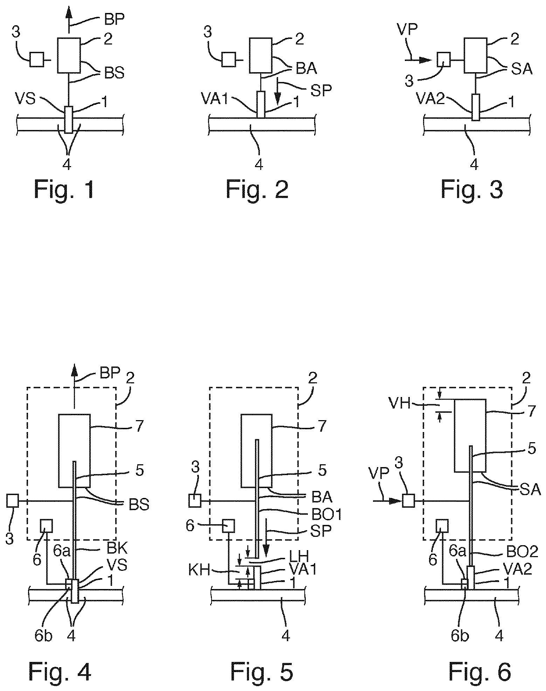

Die in den Fig. 1 bis 3 blockdiagrammatisch gezeigte Selbstschlussventilvorrichtung beinhaltet eine Ventilschließkörpereinheit 1, eine Ventilbetätigungseinheit 2 und eine nutzerbetätigte Verstelleinheit 3. Die Ventilschließkörpereinheit 1 greift in einen Fluidströmungsweg 4 ein und ist in einer Normalbetriebsart der Selbstschlussventilvorrichtung zwischen einer in Fig. 1 gezeigten Ventilschließstellung VS und einer in Fig. 2 gezeigten Normalbetrieb-Ventiloffenstellung VA1 beweglich angeordnet. In der Ventilschließstellung VS schließt sie den Fluidströmungsweg 4, d.h. sperrt ihn ab, so dass kein Fluid den Fluidströmungsweg 4 passieren kann. In der Normalbetrieb-Ventiloffenstellung VA1 hält die Ventilschließkörpereinheit 1 den Fluidströmungsweg 4 offen, so dass Fluid im Fluidströmungsweg 4 passieren kann, wobei es sich je nach Bedarf und Anwendungsfall bei der Normalbetrieb-Ventiloffenstellung VA1 um eine Volloffenstellung oder um eine Teiloffenstellung handeln kann. In der Volloffenstellung gibt die Ventilschließkörpereinheit 1 den Durchlassquerschnitt des Fluidströmungswegs 4 vollständig, d.h. maximal, frei, in der Teiloffenstellung gibt sie ihn nur teilweise frei, d.h. die Teiloffenstellung umfasst eine beliebige teilgeöffnete Stellung, in der die Ventilschließkörpereinheit 1 den Durchlassquerschnitt des Fluidströmungswegs 4 mit einem beliebigen Durchlassquerschnittswert größer als null und kleiner als der Maximalwert bei Volloffenstellung freigibt.

Die Ventilbetätigungseinheit 2 hält in einer stationären Schließstellung BS, wie in Fig. 1 gezeigt, die Ventilschließkörpereinheit 1 in deren Ventilschließstellung VS, während sie in einer temporären Öffnungsstellung BA, wie in Fig. 2 gezeigt, die Ventilschließkörpereinheit 1 in der Normalbetrieb-Ventiloffenstellung VA1 hält. Die Ventilbetätigungseinheit 2 gelangt nutzerbetätigt von ihrer stationären Schließstellung BS in ihre temporäre Öffnungsstellung BA, wie in Fig. 1 durch einen Betätigungspfeil BP symbolisiert. Von ihrer temporären Öffnungsstellung BA gelangt die Ventilbetätigungseinheit 2 selbsttätig in ihre stationäre Schließstellung BS, wie in Fig. 2 durch einen Selbstschlusspfeil SP symbolisiert.

Die Verstelleinheit 3 ist zur Verstellung der Ventilbetätigungseinheit 2 in einer Sonderbetriebsart der Selbstschlussventilvorrichtung von ihrer stationären Schließstellung BS in eine stationäre Sonderbetriebsstellung SA eingerichtet, in der die Ventilbetätigungseinheit 2 die Ventilschließkörpereinheit 1 in einer Sonderbetrieb-Ventiloffenstellung VA2 hält, wie in Fig. 3 gezeigt. Bei der Sonderbetrieb-Ventiloffenstellung VA2 kann es sich je nach Bedarf und Anwendungsfall um die gleiche Ventiloffenstellung wie im Normalbetrieb oder um eine davon verschiedene Ventiloffenstellung handeln, z.B. in beiden Fällen um die Volloffenstellung oder nur im einen Fall um die Volloffenstellung und im anderen Fall um eine Teiloffenstellung oder in beiden Fällen um identische oder voneinander verschiedene Teiloffenstellungen mit vorgebbarem Öffnungsgrad größer als null und kleiner als der maximale Öffnungswert bei der Volloffenstellung. Die Verstelleinheit 3 nimmt diese Verstellung auf Nutzerbetätigung hin vor, wie in Fig. 3 durch einen Verstellbetätigungspfeil VP symbolisiert.

In dieser Sonderbetriebsart verbleibt die Ventilschließkörpereinheit 1 in dieser Offenstellung VA2, bis der Benutzer durch entsprechende Betätigung der Verstelleinheit 3 die Ventilbetätigungseinheit 2 wieder aus ihrer stationären Sonderbetriebsstellung SA herausbringt, d.h. wieder auf Normalbetrieb umstellt, vorzugsweise durch Verbringen der Ventilbetätigungseinheit 2 in ihre stationäre Schließstellung BS oder alternativ in ihre temporäre Öffnungsstellung BA.

Die Bewegung der Ventilschließkörpereinheit 1 zwischen ihrer Schließstellung VS und ihrer Offenstellung VA1 im normalen Ventilbetrieb kann beispielsweise eine lineare, translatorische Bewegung oder eine Drehbewegung eines Ventilschließkörperelements relativ zu einem korrespondierenden Ventilsitz beinhalten, wie dies herkömmlich ist und daher hier keiner näheren Erläuterungen bedarf. Die Verstellung der Ventilbetätigungseinheit 2 durch die Verstelleinheit 3 in der Sonderbetriebsart von ihrer Schließstellung BS in ihre Sonderbetriebsstellung SA kann in diesem Fall vorzugsweise eine gleichartige translatorische Bewegung oder Drehbewegung der Ventilschließkörpereinheit 1 bzw. eines Ventilschließkörperelements derselben von der Ventilschließstellung VS in die Sonderbetrieb-Ventiloffenstellung VA2 beinhalten.

In einer vorteilhaften Ausführung, wie sie in den Fig. 4 bis 6 gezeigt ist, weist die Ventilbetätigungseinheit 2 der Selbstschlussventilvorrichtung ein Betätigungsglied 5 auf, das zwischen einer ersten Öffnungslage BO1 und einer Kopplungsschließlage BK beweglich angeordnet ist. Im Normalbetrieb der Selbstschlussventilvorrichtung kann das Betätigungsglied 5 zwischen der ersten Öffnungslage BO1 und der Kopplungsschließlage BK bewegt werden, wobei es die erste Öffnungslage BO1 einnimmt, wenn sich die Ventilbetätigungseinheit 2 in ihrer temporären Öffnungsstellung BA befindet, wie in Fig. 5 gezeigt, und die Kopplungsschließlage BK einnimmt, wenn sich die Ventilbetätigungseinheit 2 in ihrer stationären Schließstellung BS befindet, wie in Fig. 4 gezeigt.

Der Benutzer kann folglich das Ventil im Normalbetrieb dadurch öffnen, dass er die Ventilbetätigungseinheit 2 aus ihrer stationären Schließstellung BS heraus in ihre temporäre Öffnungsstellung BA verbringt, wodurch das Betätigungsglied 5 temporär aus der Kopplungsschließlage BK heraus in seine erste Öffnungslage BO1 gelangt und sich die Ventilschließkörpereinheit 1 aus ihrer Schließstellung VS heraus in ihre Offenstellung VA1 bewegt. Dies öffnet temporär den Fluidströmungsweg 4. Anschließend gelangt gemäß der Selbstschlussfunktionalität im Normalbetrieb die Ventilschließkörpereinheit 1 nach einer gewünschten, vorgebbaren Zeitdauer selbsttätig wieder in ihre Schließstellung VS zurück, was dadurch bewirkt wird, dass die Ventilbetätigungseinheit 2 selbsttätig aus ihrer temporären Öffnungsstellung BA heraus in ihre stationäre Schließstellung BS gelangt und folglich das Betätigungsglied 5 aus seiner ersten Öffnungslage BO1 heraus in seine Kopplungsschließlage BK gelangt.

Zur Einstellung der Sonderbetriebsart der Selbstschlussventilvorrichtung betätigt der Benutzer die Verstelleinheit 3, die dann die Ventilbetätigungseinheit 2 in deren stationäre Sonderbetriebsstellung SA verstellt, wodurch die Ventilbetätigungseinheit 2 das Betätigungsglied 5 von der Kopplungsschließlage BK in eine zweite Öffnungslage BO2 verbringt, wie in Fig. 6 gezeigt. Dadurch gelangt die Ventilschließkörpereinheit 1 in ihre Sonderbetrieb-Ventiloffenstellung VA2, in der das Ventil bleibend geöffnet ist. Durch erneute Betätigung der Verstelleinheit 3 kann der Benutzer die Ventilbetätigungseinheit 2 wieder auf Normalbetrieb umstellen, d.h. den stationären Schließstellungszustand des Ventils wieder herstellen.

In einer vorteilhaften Ausführung, wie ebenfalls in den Fig. 4 bis 6 gezeigt, weist die Ventilbetätigungseinheit 2 eine Vorspanneinheit 6 auf, welche die Ventilschließkörpereinheit 1 durch einen Fluiddruck 6a und/oder durch ein elastisches Vorspannelement 6b von ihrer Ventilschließstellung VS in ihre Normalbetrieb-Ventiloffenstellung VA1 vorspannt. Das Betätigungsglied 5 ist in diesem Fall unidirektional mit der Ventilschließkörpereinheit 1 in Richtung zu deren Ventilschließstellung VS hin längs eines die Kopplungsschließlage BK als eine schließsetige Endlage aufweisenden Kopplungshubs KH bewegungsgekoppelt. Somit bringt in dieser Systemrealisierung im Normalbetrieb die Ventilbetätigungseinheit 2 mittels ihres sich längs seines Kopplungshubs KH bewegenden Betätigungsglieds 5 die Ventilschließkörpereinheit 1 selbsttätig in deren Schließstellung VS zurück, während zum nutzerinitiierten Öffnen des Ventils das Betätigungsglied 5 die Bewegung der Ventilschließkörpereinheit 1 aus ihrer Schließstellung VS in ihre temporäre Offenstellung VA1 freigibt und die Öffnungsbewegung der Ventilschließkörpereinheit 1 durch die Vorspanneinheit 6 bewirkt wird.

In der Ausführung der Selbstschlussventilvorrichtung gemäß den Fig. 4 bis 6 weist die Ventilbetätigungseinheit 2 eine Betätigungsglied-Führungsvorrichtung 7 auf, an der das Betätigungsglied 5 beweglich derart geführt ist, dass für dieses die erwähnten Bewegungsabläufe ermöglicht sind. Beispielsweise kann es sich bei dem Betätigungsglied 5 um eine Betätigungsstange oder dergleichen handeln, die entlang ihrer Längsrichtung translationsbeweglich an der Betätigungsglied-Führungsvorrichtung 7 geführt ist. Alternativ kann das Betätigungsglied 5 ein drehbeweglich geführtes Element sein.

Die Verstellung des Betätigungsglieds 5 durch die Verstelleinheit 3 in der Sonderbetriebsart der Selbstschlussventilvorrichtung von der Kopplungsschließlage BK in die zweite Öffnungslage BO2 kann in diesem Fall beispielsweise dadurch bewirkt werden, dass der Benutzer durch die Verstelleinheit 3 die Betätigungsglied-Führungsvorrichtung 7 samt dem angekoppelten Betätigungsglied 5 in der entsprechenden Richtung, d.h. in Ventilöffnungsrichtung, bewegt, z.B. verschiebt oder verdreht. Dies ist in Fig. 6 durch einen zugehörigen Verstellhub VH der Betätigungsglied-Führungsvorrichtung 7 repräsentiert.

In entsprechenden Ausführungen weist das Betätigungsglied 5, wie in den Fig. 4 bis 6 gezeigt, einen Leerhub LH zwischen seiner ersten Öffnungslage BO1 und einer öffnungsseitigen Endlage seines Kopplungshubs KH auf. Während des Selbstschlussvorgangs des Ventils legt das Betätigungsglied 5 in diesem Fall zuerst den Leerhub LH zurück, bevor es in Wirkverbindung mit der Ventilschließkörpereinheit 1 tritt, was der Fall ist, sobald es die öffnungsseitige Endlage seines Kopplungshubs KH erreicht, und im weiteren Verlauf durch seine Bewegung längs seines Kopplungshubs KH die Ventilschließkörpereinheit 1 von ihrer Normalbetrieb-Ventiloffenstellung VA1 in ihre Ventilschließstellung VS verbringt.

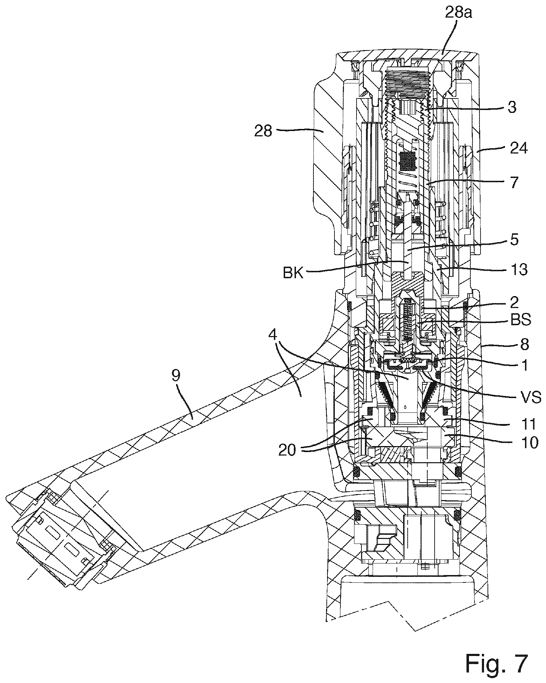

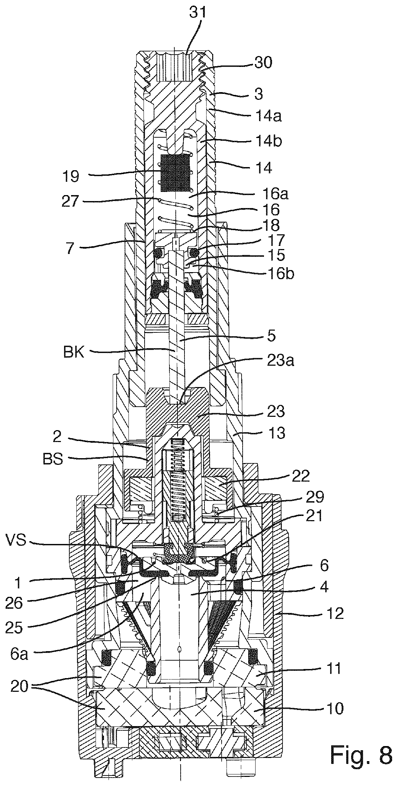

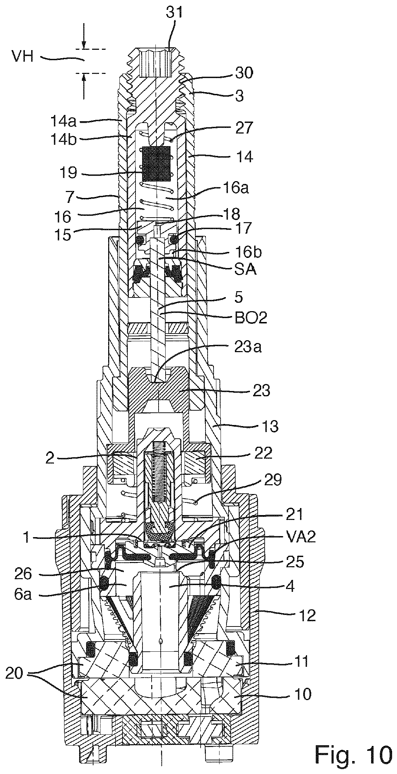

Die Fig. 7 bis 10 veranschaulichen eine sanitäre Auslaufarmatur in einer Ausführung mit integrierter, als Misch- und Absperrventilvorrichtung ausgelegter Selbstschlussventilvorrichtung nach Art der Fig. 4 bis 6. Die sanitäre Auslaufarmatur beinhaltet ein Armaturengehäuse, in welchem die Selbstschlussventilvorrichtung untergebracht ist. Im gezeigten Beispiel umfasst das Armaturengehäuse einen in Gebrauchslage etwa vertikal verlaufenden, zylindrischen Grundkörper 8, von dem umfangsseitig ein Auslaufrohr 9 abgeht und in dem die in den Fig. 8 und 10 in Einzeldarstellung gezeigte Selbstschlussventilvorrichtung angeordnet ist, die beispielsweise in einer Kartuschenbauform ausgeführt sein kann.

In dieser Ausführung beinhaltet die Selbstschlussventilvorrichtung eine Fluidmischeinheit 20, die zur Bildung eines Mischfluids durch Mischung zweier getrennt zugeführter Fluide in einem einstellbaren Mischungsverhältnis und zur Abgabe des Mischfluids eingerichtet ist, wobei die Ventilbetätigungseinheit 2 eine nutzerbetätigte Mischbedieneinheit 24 zur Einstellung des Mischungsverhältnisses durch entsprechende Steuerung der Fluidmischeinheit 20 umfasst. In der Anwendung für Sanitärarmaturen können die beiden Fluide insbesondere Kaltwasser und Warmwasser sein. Im gezeigten Beispiel der Fig. 7 bis 10 beinhaltet die Fluidmischeinheit 20 in an sich bekannter und daher hier nicht näher zu erläuternder Bauweise eine an einem Ventil- bzw. Kartuschengehäuse 12 feststehende Ventilscheibe 10 und einen drehbeweglichen Ventilmischkörper 11 in Form einer gegen die feststehende Ventilscheibe 10 drehbeweglich anliegenden Ventilscheibe. Die Mischbedieneinheit 24 beinhaltet im gezeigten Beispiel ein drehbewegliches Bedienelement 28, das drehfest mit dem drehbeweglichen Ventilmischkörper 11 gekoppelt ist, im gezeigten Beispiel über eine Drehbetätigungshülse 13, auf die das Bedienelement 28 als ein Drehknopf drehfest aufgesetzt ist.

Die Funktionsweise eines solchen Mischventilteils der Selbstschlussventilvorrichtung ist an sich bekannt und bedarf daher hier keiner näheren Erläuterung, es sei hierfür z.B. auf die Patentschrift DE 10 2018 206 354 B3 und eine von der Anmelderin unter der Artikelnummer 92529000 vertriebene Mischervorrichtung verwiesen.

Zusätzlich weist die Selbstschlussventilvorrichtung in entsprechenden Ausführungen, wie in derjenigen der Fig. 7 bis 10, einen Absperrventilteil mit einer Hydraulikdämpfereinheit in Form einer translatorischen Kolben/Zylinder-Einheit nach Art eines herkömmlichen Lineardämpfers als Bestandteil der Ventilbetätigungseinheit 2 auf. Die Hydraulikdämpfereinheit beinhaltet einen axialbeweglich koaxial in der Drehbetätigungshülse 13 geführten Hydraulikzylinder 14 und einen in einem Kolbenraum 16 des Hydraulikzylinders 14 axialbeweglich geführten Verdrängerkolben 15, mit dem das Betätigungsglied 5, hier beispielhaft in einer Ausführung als Kolbenstange, starr bewegungsgekoppelt ist. Der Verdrängerkolben 15 unterteilt den Kolbenraum 16 in zwei Halbräume 16a, 16b und ist zwischen einer in den Fig. 7 bis 10 gezeigten, stationären Kolbenendlage, mit der im Normalbetrieb die Kopplungsschließlage BK und in der Sonderbetriebsart die zweite Öffnungslage BO2 des Betätigungsglieds 5 korrespondieren, und einer instationären Kolbenendlage beweglich angeordnet, mit der im Normalbetrieb die erste Öffnungslage BO1 des Betätigungsglieds 5 korrespondiert. Eine Vorspannfeder 27 spannt den Verdrängerkolben 15 in Richtung seiner stationären Kolbenendlage vor, die einer am weitesten aus dem Hydraulikzylinder 14 ausgefahrenen Stellung des Betätigungsglieds 5 entspricht. Die Hydraulikdämpfereinheit bildet somit in dieser Realisierung die Betätigungsglied-Führungsvorrichtung 7.

Des Weiteren beinhaltet die Hydraulikdämpfereinheit eine bei Bewegung des Verdrängerkolbens 15 in Richtung seiner instationären Kolbenendlage öffnende und bei Bewegung des Verdrängerkolbens 15 in Richtung seiner stationären Kolbenendlage schließende Hydraulikfluid-Durchlassverbindung 17 zwischen den beiden Kolbenhalbräumen 16a, 16b sowie eine mindestens bei Bewegung des Verdrängerkolbens 15 in Richtung seiner stationären Kolbenendlage offene Hydraulikfluid-Drosselverbindung 18 zwischen den beiden Halbräumen 16a, 16b. Optional ist im Kolbenraum 16 ein kompressibles Volumenausgleichselement 19 angeordnet, wie gezeigt. Dies kann z.B. ein Schwammkörper oder ein gasgefüllter Ballonkörper sein.

In einer entsprechenden Ausführung beinhaltet die Ventilschließkörpereinheit 1, wie im Ausführungsbeispiel der Fig. 7 bis 10, einen Membranventilkörper 21 mit magnetbetätigter Pilotventilvorsteuerung, wobei ein zugehöriger Magnet 22 von einer Magnethalterung 23 gehalten ist, die eine Anschlagfläche 23a für das Betätigungsglied 5 aufweist. In dieser Ausführung ist das Betätigungsglied 5 unidirektional mit der Ventilschließkörpereinheit 1 in Richtung zu deren in den Fig. 7 und 8 gezeigten Schließstellung hin bewegungsgekoppelt, und die Ventilbetätigungseinheit 2 weist die Vorspanneinheit 6 auf, die den Membranventilkörper 21 von seiner gegen einen korrespondierenden Ventilsitz 25 anliegenden Schließlage in Richtung seiner Offenstellung vorspannt. Im gezeigten Beispiel beinhaltet die Vorspanneinheit 6 einen im Fluidströmungsweg 4 stromaufwärts des Membranventilkörpers 21 in einem zugehörigen Ventilraum 26 anstehenden und den Membranventilkörper 21 in dessen Offenstellung drückenden Fluiddruck 6a. Optional umfasst die Vorspanneinheit 6 alternativ oder zusätzlich ein nicht gezeigtes, elastisches Vorspannelement, das den Membranventilkörper 21 in Richtung seiner Offenstellung drückt oder zieht, z.B. eine entsprechende Vorspannfeder.

Die Funktionsweise der in den Fig. 7 bis 10 gezeigten Selbstschlussventilvorrichtung entspricht derjenigen, wie und soweit sie oben zu den Fig. 4 bis 6 erläutert ist, und entspricht im Übrigen derjenigen, wie sie für den erwähnten Aufbau des Absperrventilteils insbesondere hinsichtlich der Selbstschlussfunktion an sich bekannt ist und daher hier keiner detaillierten Erläuterung bedarf. Es kann beispielsweise auf die diesbezüglichen Erläuterungen in der oben erwähnten älteren Patentanmeldung DE 10 2018 204 147.4 der Anmelderin verwiesen werden.

Der geschlossene Zustand gemäß den Fig. 7 und 8 bildet einen Ausgangszustand der Selbstschlussventilvorrichtung. Die Hydraulikdämpereinheit drückt das Betätigungsglied 5 gegen die Magnethalterung 23 an, und die Pilotventilanordnung hält dadurch den Membranventilkörper 21 in seiner Schließstellung. Zum Öffnen des Ventils drückt der Benutzer den Hydraulikzylinder 14 nach vorn, d.h. in den Fig. 7 und 8 nach unten, wozu er axial auf das Bedienelement 28 drückt, das axial bewegungsstarr an den Hydraulikzylinder 14 angekoppelt und gegenüber diesem drehbeweglich gehalten ist. Das Bedienelement 28 fungiert in diesem Fall somit als ein einziges Bedienelement zur Steuerung sowohl der Fluidmischfunktion als auch der Absperrfunktion des Ventils. Dadurch gelangt der Verdrängerkolben 15 weiter in den Hydraulikzylinder 14 hinein in seine andere, instationäre Kolbenendlage. Sobald der Benutzer das Bedienelement 28 loslässt, drückt die Vorspannfeder 29 den Magneten 22 samt Magnethalterung 23 und damit das Betätigungsglied 5 samt Hydraulikzylinder 14 zurück, d.h. in den Fig. 7 und 8 nach oben, was den Membranventilkörper 21 in Öffnungsrichtung freigibt, der sich dadurch mittels des Fluiddrucks 6a und/oder der zugehörigen Vorspannfeder in seine Offenstellung bewegt. Der Verdrängerkolben 15 beginnt sich unter der Wirkung der Vorspannfeder 27 wieder nach vorn zu bewegen, d.h. in den Fig. 7 und 8 nach unten, verlangsamt durch die Drosselverbindung 18 und optional zeitverzögert durch den Leerhub LH, falls vorgesehen. Dadurch gelangt der Membranventilkörper 21, d.h. die Ventilschließkörpereinheit 1, selbsttätig mit vorgebbarer Zeitverzögerung aus ihrer folglich temporären Offenstellung VA1 im Normalbetrieb wieder in ihre stationäre Schließstellung VS.

In vorteilhaften Ausführungen der Selbstschlussventilvorrichtung beinhaltet die Verstelleinheit 3, wie in den Ausführungsbeispielen der Fig. 7 bis 12, eine verstellbewegliche Ankopplung des Betätigungsglieds 5 an den Hydraulikzylinder 14. Dazu umfasst in diesen gezeigten Beispielen der Hydraulikzylinder 14 einen Außenzylinder 14a und einen Verstellzylinder 14b, der in dem Außenzylinder 14a koaxial gehalten ist, und zwar derart, dass er axial gegenüber diesem verstellbeweglich ist.

Im Beispiel der Fig. 7 bis 10 ist hierzu der Verstellzylinder 14b an den Außenzylinder 14a über eine Schraubverbindung 30 angekoppelt, die durch ein am Verstellzylinder 14b ausgebildetes Außengewinde und ein am Außenzylinder 14a ausgebildetes Innengewinde gebildet ist. Die axiale Verstellbewegung wird in diesem Fall durch Verdrehen des Verstellzylinders 14b gegenüber dem Außenzylinder 14a bewirkt, was aufgrund der Schraubverbindung 30 zu einer axialen Verschiebung des Verstellzylinders 14b gegenüber dem Außenzylinder 14a führt. Demgemäß kann der Benutzer die Selbstschlussventilvorrichtung dadurch vom Normalbetrieb in die Sonderbetriebsart verbringen, dass er den Verstellzylinder 14b gegenüber dem Außenzylinder 14a um den benötigten, in Fig. 10 angegebenen Verstellhub VH verstellt, d.h. ihn um dieses Maß aus dem Außenzylinder 14a herausdreht.

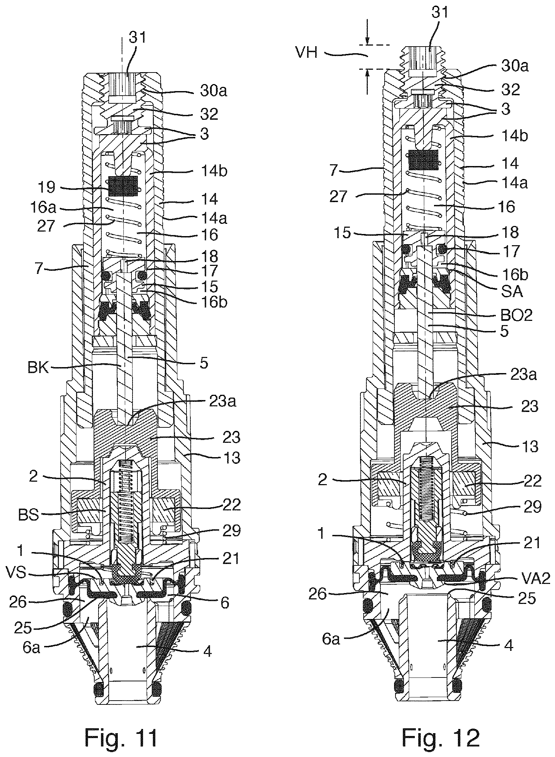

Die in den Fig. 11 und 12 gezeigte Ausführungsvariante der Selbstschlussventilvorrichtung entspricht derjenigen der Fig. 7 bis 10 mit der einzigen Ausnahme, dass der Verstellzylinder 14b nicht direkt mittels einer Schraubverbindung am Außenzylinder 14a schraubbeweglich und dadurch axial verschieblich gehalten ist, sondern die Verstelleinheit 3 zusätzlich eine Stellschraube 32 umfasst, die über eine Schraubverbindung 30a an den Außenzylinder 14a angekoppelt ist, wobei die Schraubverbindung 30a in diesem Fall das am Außenzylinder 14a ausgebildete Innengewinde und ein an der Stellschraube 32 ausgebildetes Außengewinde umfasst. Der Verstellzylinder 14b liegt mit seinem zugewandten Stirnende gegen eine zugeordnete Anlagestirnfläche der Stellschraube 32 im Schließzustand der Ventilvorrichtung gemäß Fig. 11 vorgespannt an. Die Fig. 11 und 12 zeigen der Einfachheit halber nur den Absperrventilteil der Selbstschlussventilvorrichtung. Die übrigen, hier nicht gezeigten Bestandteile der Ventilvorrichtung entsprechen denen des in den Fig. 7 bis 10 gezeigten Ausführungsbeispiels.

Die axiale Verstellbewegung wird somit bei der Ausführungsvariante der Fig. 11 und 12 durch Verdrehen der Stellschraube 32 gegenüber dem Außenzylinder 14a bewirkt, was aufgrund der Schraubverbindung 30a zu einer axialen Verschiebung der Stellschraube 32 und damit des gegen diese vorgespannt anliegenden Verstellzylinders 14b gegenüber dem Außenzylinder 14a führt. Demgemäß kann der Benutzer die Selbstschlussventilvorrichtung wiederum dadurch vom Normalbetrieb in die Sonderbetriebsart verbringen, dass er die Stellschraube 32 gegenüber dem Außenzylinder 14a um den in Fig. 12 angegebenen Verstellhub VH verstellt, d.h. sie um dieses Maß aus dem Außenzylinder 14a herausdreht, wodurch sich der Verstellzylinder 14b um diesen Verstellhub VH im Außenzylinder 14a axial zurückbewegt, d.h. in den Fig. 11 und 12 nach oben.

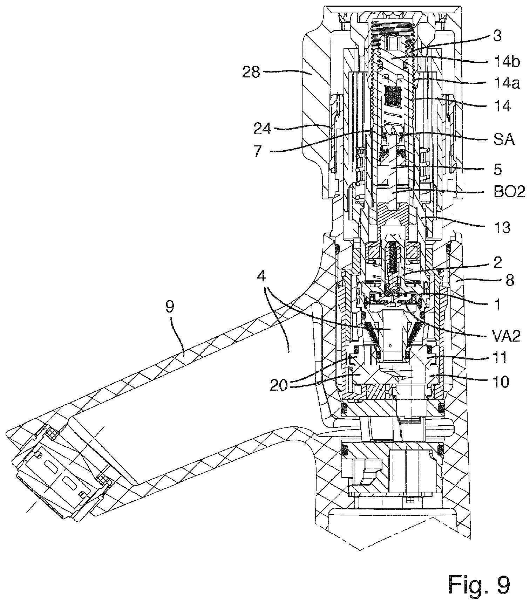

Als Folge der axialen Verschiebung des Verstellzylinders 14b um den Verstellhub VH gelangt das Betätigungsglied 5 in diesen Ausführungen aus seiner in den Fig. 7 und 8 bzw. 11 gezeigten Kopplungsschließlage BK in seine in den Fig. 9 und 10 bzw. 12 gezeigte zweite Öffnungslage BO2, d.h. die Ventilbetätigungseinheit 2 gelangt in ihre stationäre Sonderbetriebsstellung SA, in der sie die Ventilschließkörpereinheit 1 in der Sonderbetrieb-Ventiloffenstellung VA2 hält, was die Sonderbetriebsart für die Selbstschlussventilvorrichtung aktiviert.

Der Verstellhub VH sorgt in diesen Ausführungen der Selbstschlussventilvorrichtung in der Sonderbetriebsart dafür, dass das Betätigungsglied 5, obwohl es sich zusammen mit dem Verdrängerkolben 15 in der am weitesten aus dem Hydraulikzylinder 14 heraus nach vorn, d.h. in den Fig. 7 bis 12 nach unten, vorbewegten Stellung befindet, den Membranventilkörper 21 über die Pilotventilanordnung mit dem Magneten 22 und der Magnethalterung 23 nicht mehr entgegen dem Fluiddruck 6a und/oder der optionalen Vorspannfeder 6b in seine Schließstellung zu drücken vermag. Folglich bleibt in dieser in den Fig. 9, 10 und 12 gezeigten Sonderbetriebsstellung des Verstellzylinders 14b relativ zum Außenzylinder 14a die Ventilbetätigungseinheit 2 stationär in ihrer Sonderbetriebsstellung SA, in der sie die Ventilschließkörpereinheit 1 in ihrer zugehörigen Sonderbetrieb-Ventiloffenstellung VA2 hält.

In den gezeigten Fällen bildet die Volloffenstellung des Ventils die Sonderbetrieb-Ventiloffenstellung VA2. Alternativ kann letztere von einer Teiloffenstellung des Ventils gebildet sein. Speziell ist es in dieser gezeigten Ausführung der Selbstschlussventilvorrichtung möglich, eine beliebige gewünschte Teiloffenstellung des Ventils als Sonderbetrieb-Ventiloffenstellung VA2 dadurch einzustellen, dass der Verstellzylinder 14b bzw. die Stellschraube 32 nicht um das gezeigte, maximale Maß an Verstellhub VH aus dem Außenzylinder 14a herausgedreht wird, sondern nur um ein entsprechend geringeres Maß.

Um den Verstellzylinder 14b bzw. die Stellschraube 32 für die Verstellung gegenüber dem Außenzylinder 14a zu verdrehen, ist als Verstellhilfe in den gezeigten Ausführungsbeispielen eine Mehrkantaufnahme 31 an einer Stirnseite des Verstellzylinders 14b bzw. einer Stirnseite der Stellschraube 32 ausgebildet, in die der Benutzer ein passendes Mehrkantschlüssel-Werkzeug einführen kann. Um die Zugänglichkeit für das Werkzeug zu ermöglichen und im Normalbetrieb für eine Abdeckung dieses Zugangsbereichs zu sorgen, ist das Bedienelement 28 mit einer abnehmbaren Kappe 28a versehen, die in Fig. 7 zu sehen und in Fig. 9 abgenommen ist.

In der Sonderbetriebsart kann z.B. die oben erwähnte thermische Desinfektion für die Selbstschlussventilvorrichtung bzw. die zugehörige sanitäre Auslaufarmatur vorgenommen werden. Dazu stellt der Benutzer die Fluidmischeinheit der Ventilvorrichtung durch entsprechendes Verdrehen des Bedienelements 28 vorzugsweise auf ausschließliche Warmwasserzufuhr ohne Kaltwasseranteil. Da die Selbstschlussfunktion der Ventilvorrichtung in dieser Sonderbetriebsart aufgehoben ist, kann der thermische Desinfektionsvorgang, d.h. das Durchspülen mit Warmwasser, ungestört von dieser Selbstschlussfunktion für die jeweils gewünschte Zeitdauer durchgeführt werden.

Zur Beendigung der Sonderbetriebsart dreht der Benutzer den Verstellzylinder 14b bzw. die Stellschraube 32 wieder um den Verstellhub VH axial gegenüber dem Außenzylinder 14a zurück. Die Selbstschlussventilvorrichtung kann dann wieder normal einschließlich ihrer Selbstschlussfunktionalität betrieben werden.

Wie die gezeigten und die weiteren oben erläuterten Ausführungsbeispiele deutlich machen, stellt die Erfindung eine vorteilhafte Selbstschlussventilvorrichtung zur Verfügung, die über die Möglichkeit verfügt, nutzerinitiiert die Selbstschlussfunktionalität außer Kraft zu setzen und die Ventilvorrichtung ungehindert von dieser Selbstschlussfunktion in der betreffenden Sonderbetriebsart bleibend offen zu halten. Dies kann für die erwähnte thermische Desinfektion bei Sanitärarmaturen nutzbringend eingesetzt werden, wobei die Selbstschlussventilvorrichtung auch anderweitig überall dort nutzbringend einsetzbar ist, wo Bedarf an einer Ventilvorrichtung besteht, die im normalen Betrieb selbsttätig schließt und in einer Sonderbetriebsart bleibend offen gehalten werden kann.

## Patentansprüche

1. Selbstschlussventilvorrichtung, insbesondere selbstschließende sanitäre Misch- und Absperrventilvorrichtung, mit
- einer Ventilschließkörpereinheit (1), die in einer Normalbetriebsart der Selbstschlussventilvorrichtung zwischen einer Ventilschließstellung (VS) und einer Normalbetrieb-Ventiloffenstellung (VA1) beweglich angeordnet ist,
- einer Ventilbetätigungseinheit (2), die in einer stationären Schließstellung (BS) die Ventilschließkörpereinheit in deren Ventilschließstellung hält und in einer temporären Öffnungsstellung (BA) die Ventilschließkörpereinheit in der Normalbetrieb-Ventiloffenstellung hält, wobei die Ventilbetätigungseinheit nutzerbetätigt von ihrer stationären Schließstellung in ihre temporäre Öffnungsstellung und selbsttätig von ihrer temporären Öffnungsstellung in ihre stationäre Schließstellung gelangt, und
- einer nutzerbetätigten Verstelleinheit (3), die zur Verstellung der Ventilbetätigungseinheit (2) in einer Sonderbetriebsart der Selbstschlussventilvorrichtung von ihrer stationären Schließstellung (BS) in eine stationäre Sonderbetriebsstellung (SA) eingerichtet ist, in der die Ventilbetätigungseinheit die Ventilschließkörpereinheit (1) in einer Sonderbetrieb-Ventiloffenstellung (VA2) hält,
- wobei die Ventilbetätigungseinheit ein Betätigungsglied (5) aufweist, das zwischen einer ersten Öffnungslage (BO1), die es einnimmt, wenn sich die Ventilbetätigungseinheit in ihrer temporären Öffnungsstellung befindet, und einer Kopplungsschließlage (BK) beweglich angeordnet ist, die es einnimmt, wenn sich die Ventilbetätigungseinheit in ihrer stationären Schließstellung befindet, wobei die Verstelleinheit, wenn sie in der Sonderbetriebsart der Selbstschlussventilvorrichtung die Ventilbetätigungseinheit in deren stationäre Sonderbetriebsstellung verstellt, das Betätigungsglied von der Kopplungsschließlage in eine zweite Öffnungslage (BO2) verstellt,
**dadurch gekennzeichnet, dass**
- die Ventilbetätigungseinheit (2) eine Hydraulikdämpfereinheit aufweist, die einen nutzerbetätigt axialbeweglich angeordneten Hydraulikzylinder (14) mit einem Kolbenraum (16), einen im Kolbenraum beweglich zwischen einer stationären Kolbenendlage und einer instationären Kolbenendlage angeordneten Verdrängerkolben (15), mit dem das Betätigungsglied (5) bewegungsgekoppelt ist und der den Kolbenraum in zwei Halbräume (16a, 16b) unterteilt, eine bei Bewegung des Verdrängerkolbens in Richtung seiner instationären Kolbenendlage öffnende und bei Bewegung des Verdrängerkolbens in Richtung seiner stationären Kolbenendlage schließende Hydraulikfluid-Durchlassverbindung (17) zwischen den beiden Halbräumen und eine mindestens bei Bewegung des Verdrängerkolbens in Richtung seiner stationären Kolbenendlage offene Hydraulikfluid-Drosselverbindung (18) zwischen den beiden Halbräumen umfasst.

2. Selbstschlussventilvorrichtung nach Anspruch 1, weiter **dadurch gekennzeichnet, dass** die Ventilbetätigungseinheit (2) eine Vorspanneinheit (6) aufweist, welche die Ventilschließkörpereinheit (1) von ihrer Ventilschließstellung in ihre Normalbetrieb-Ventiloffenstellung durch einen Fluiddruck (6a) und/oder durch ein elastisches Vorspannelement (6b) vorspannt, und das Betätigungsglied (5) unidirektional mit der Ventilschließkörpereinheit in Richtung zu deren Ventilschließstellung hin längs eines Kopplungshubs (KH) von einer öffnungsseitigen Endlage zu der Kopplungsschließlage als einer schließseitigen Endlage bewegungsgekoppelt ist.

3. Selbstschlussventilvorrichtung nach Anspruch 1 oder 2, weiter **dadurch gekennzeichnet, dass** die Verstelleinheit eine verstellbewegliche Ankopplung des Betätigungsglieds an den Hydraulikzylinder beinhaltet.

4. Selbstschlussventilvorrichtung nach Anspruch 3, weiter **dadurch gekennzeichnet, dass** der Hydraulikzylinder einen Außenzylinder (14a) und einen in dem Außenzylinder koaxial und axial gegenüber diesem verstellbeweglich gehaltenen Verstellzylinder (14b) beinhaltet.

5. Selbstschlussventilvorrichtung nach einem der Ansprüche 1 bis 4, weiter **dadurch gekennzeichnet, dass** das Betätigungsglied einen Leerhub (LH) zwischen seiner ersten Öffnungslage und der öffnungsseitigen Endlage seines Kopplungshubs aufweist.

6. Selbstschlussventilvorrichtung nach einem der Ansprüche 1 bis 5, weiter **dadurch gekennzeichnet, dass** die Ventilschließkörpereinheit einen Membranventilkörper (21) mit magnetbetätigter Pilotventilvorsteuerung umfasst, wobei ein zugehöriger Magnet (22) von einer Magnethalterung (23) gehalten ist, die eine Anschlagfläche (23a) für das Betätigungsglied aufweist.

7. Selbstschlussventilvorrichtung nach einem der Ansprüche 1 bis 6, weiter **dadurch gekennzeichnet, dass**
- sie eine Fluidmischeinheit (20) aufweist, die zur Bildung eines Mischfluids durch Mischung zweier getrennt zugeführter Fluide in einem einstellbaren Mischungsverhältnis und zur Abgabe des Mischfluids eingerichtet ist, und
- die Ventilbetätigungseinheit eine nutzerbetätigte Mischbedieneinheit (24) zur Einstellung des Mischungsverhältnisses umfasst.

8. Selbstschlussventilvorrichtung nach Anspruch 7, weiter **dadurch gekennzeichnet, dass**
- die Fluidmischeinheit einen drehbeweglichen Ventilmischkörper (11) aufweist und
- die Mischbedieneinheit ein drehbewegliches Bedienelement (28) aufweist, das drehfest mit dem drehbeweglichen Ventilmischkörper gekoppelt ist.

## Claims

1. Self-closing valve device, preferably self-closing sanitary mixing and shut-off valve device, comprising
- a valve closing body unit (1) which, in a normal operation mode of the self-closing valve device, is disposed to be movable between a valve closed position (VS) and a normal operation valve open position (VA1),
- a valve actuation unit (2) which, in a stationary closed position (BS), retains the valve closing body unit in the valve closed position thereof and, in a temporary open position (BA), retains the valve closing body unit in the normal operation valve open position, wherein the valve actuation unit from its stationary closed position reaches its temporary open position upon user-operation and from its temporary open position reaches its stationary closed position in a self-acting manner, and
- a user-operated adjustment unit (3) which is configured for adjusting the valve actuation unit (2) in a special operation mode of the self-closing valve device from its stationary closed position (BS) to a stationary special operation position (SA) in which the valve actuation unit retains the valve closing body unit (1) in a special operation valve open position (VA2),
- wherein the valve actuation unit comprises an actuation member (5) which is disposed to be movable between a first open state (BO1), that it takes when the valve actuation unit is in its temporary open position, and a coupling closed state (BK), that it takes when the valve actuation unit is in its stationary closed position, wherein the adjustment unit, when in the special operation mode of the self-closing valve device it adjusts the valve actuation unit to the stationary special operation position thereof, adjusts the actuation member from the coupling closed state to a second open state (BO2),
**characterized in that**
- the valve actuation unit (2) comprises a hydraulic damper unit which comprises a user-operated axially movable hydraulic cylinder (14) having a piston chamber (16), a displacement piston (15) disposed in the piston chamber to be movable between a stationary piston end state and a transient piston end state, to which displacement piston the actuation member is movement-coupled and which displacement piston subdivides the piston chamber in two half chambers (16a, 16b), a hydraulic fluid passage connection (17) between the two half chambers which opens upon movement of the displacement piston in the direction towards its transient piston end state and closes upon movement of the displacement piston in the direction towards its stationary piston end state, and a hydraulic fluid restrictor connection (18) between the two half chambers which is open at least upon movement of the displacement piston in the direction towards its stationary piston end state.

2. Self-closing valve device according to claim 1, further **characterized in that** the valve actuation unit includes a pretensioning unit (6) to pretension the valve closing body unit from its valve closed position to its normal operation valve open position by a fluid pressure (6a) and/or by an elastic pretensioning element (6b), and **in that** the actuation member is unidirectionally movement-coupled to the valve closing body unit in the direction towards the valve closed position thereof along a coupling stroke (KH) from an open-sided end state to the coupling closed state as a closed-sided end state.

3. Self-closing valve device according to claim 1 or 2, further **characterized in that** the adjustment unit comprises a coupling of the actuation member to the hydraulic cylinder that is movable for adjusting.

4. Self-closing valve device according to claim 3, further **characterized in that** the hydraulic cylinder comprises an outer cylinder (14a) and an adjustment cylinder (14b) retained in the outer cylinder coaxially and to be movable axially in relation thereto for adjusting.

5. Self-closing valve device according to any one of claims 1 to 4, further **characterized in that** the actuation member has an idle stroke (LH) between its first open state and the open-sided end state of its coupling stroke.

6. Self-closing valve device according to any one of claims 1 to 5, further **characterized in that** the valve closing body unit comprises a diaphragm valve body (21) with solenoid-operated pilot valve control, wherein an associated magnet (22) is held by a magnet holder (23) which has an abutment surface (23a) for the actuation member.

7. Self-closing valve device according to any one of claims 1 to 6, further **characterized in that**
- it includes a fluid mixing unit (20) which is configured for producing a mixing fluid by mixing of two separately supplied fluids in a controllable mixing ratio and for discharging the mixing fluid, and
- the valve actuation unit comprises a user-operated mixing control unit (24) for setting the mixing ratio.

8. Self-closing valve device according to claim 7, further **characterized in that**
- the fluid mixing unit comprises a rotary valve mixing body (11), and
- the mixing control unit comprises a rotary control element (28) which is coupled to the rotary valve mixing body for conjoint rotation.

## Revendications

1. Dispositif de vanne à fermeture automatique, en particulier dispositif de vanne sanitaire de mélange et d'arrêt à fermeture automatique, comprenant
- une unité de corps de fermeture de vanne (1) qui, dans un mode de fonctionnement normal du dispositif de vanne à fermeture automatique, est disposée de manière mobile entre une position de fermeture de vanne (VS) et une position d'ouverture de vanne de fonctionnement normal (VA1), et
- une unité d'actionnement de vanne (2) qui, dans une position de fermeture stationnaire (BS), maintient l'unité de corps de fermeture de vanne dans sa position de fermeture de vanne et qui, dans une position d'ouverture temporaire (BA), maintient l'unité de corps de fermeture de vanne dans la position d'ouverture de vanne de fonctionnement normal, l'unité d'actionnement de vanne passant, sous l'action de l'utilisateur, de sa position de fermeture stationnaire à sa position d'ouverture temporaire et passant, de manière automatique, de sa position d'ouverture temporaire à sa position de fermeture stationnaire, et
- une unité de déplacement (3) actionnée par l'utilisateur, qui, dans un mode de fonctionnement spécial du dispositif de vanne à fermeture automatique, est conçue pour déplacer l'unité d'actionnement de vanne (2) de sa position de fermeture stationnaire (BS) à une position de fonctionnement spécial stationnaire (SA), dans laquelle l'unité d'actionnement de vanne maintient l'unité de corps de fermeture de vanne (1) dans une position d'ouverture de vanne de fonctionnement spécial (VA2),
dans lequel
l'unité d'actionnement de vanne comprend un organe d'actionnement (5) disposé de manière mobile entre une première position d'ouverture (BO1) qu'il occupe lorsque l'unité d'actionnement de vanne est dans sa position d'ouverture temporaire, et une position de fermeture de couplage (BK) qu'il occupe lorsque l'unité d'actionnement de vanne est dans sa position de fermeture stationnaire, et
l'unité de déplacement, lorsqu'elle déplace l'unité d'actionnement de vanne dans sa position de fonctionnement spécial stationnaire, en mode de fonctionnement spécial du dispositif de vanne à fermeture automatique, déplace l'organe d'actionnement de la position de fermeture de couplage à une seconde position d'ouverture (BO2),
**caractérisé en ce que**
- l'unité d'actionnement de vanne (2) présente une unité d'amortissement hydraulique qui comprend un vérin hydraulique (14) disposé de manière à pouvoir être déplacé axialement par l'utilisateur et pourvu d'une chambre de piston (16), un piston de refoulement (15) disposé de manière à pouvoir se déplacer dans la chambre de piston entre une position de piston extrême stationnaire et une position de piston extrême instationnaire, piston avec lequel l'organe d'actionnement (5) est couplé en mouvement et qui subdivise la chambre de piston en deux demi-chambres (16a, 16b), une communication de passage de fluide hydraulique (17) entre les deux demi-chambres, laquelle s'ouvre lors du mouvement du piston de refoulement en direction de sa position de piston extrême instationnaire et qui se ferme lors du mouvement du piston de refoulement en direction de sa position de piston extrême stationnaire, et une communication d'étranglement de fluide hydraulique (18) entre les deux demi-chambres, laquelle est ouverte au moins lors du mouvement du piston de refoulement en direction de sa position de piston extrême stationnaire.

2. Dispositif de vanne à fermeture automatique selon la revendication 1, **caractérisé en outre en ce que** l'unité d'actionnement de vanne (2) comprend une unité de précontrainte (6) qui met sous précontrainte l'unité de corps de fermeture de vanne (1) de sa position de fermeture de vanne à sa position d'ouverture de vanne de fonctionnement normal par une pression de fluide (6a) et/ou par un élément de précontrainte élastique (6b), et l'organe d'actionnement (5) est couplé en mouvement à l'unité de corps de fermeture de vanne en direction de la position de fermeture de vanne de celle-ci, à savoir de manière unidirectionnelle le long d'une course de couplage (KH) depuis une position extrême côté ouverture vers la position de fermeture de couplage en tant que position extrême côté fermeture.

3. Dispositif de vanne à fermeture automatique selon la revendication 1 ou 2,
**caractérisé en outre en ce que** l'unité de déplacement inclut un couplage mobile de l'organe d'actionnement au vérin hydraulique.

4. Dispositif de vanne à fermeture automatique selon la revendication 3,
**caractérisé en outre en ce que** le vérin hydraulique inclut un cylindre extérieur (14a) et un cylindre de déplacement (14b) maintenu dans le cylindre extérieur de manière coaxiale et mobile axialement par rapport à celui-ci.

5. Dispositif de vanne à fermeture automatique selon l'une des revendications 1 à 4,
**caractérisé en outre en ce que** l'organe d'actionnement présente une course à vide (LH) entre sa première position d'ouverture et la position extrême côté ouverture de sa course de couplage.

6. Dispositif de vanne à fermeture automatique selon l'une des revendications 1 à 5,
**caractérisé en outre en ce que** l'unité de corps de fermeture de vanne comprend un corps de vanne à membrane (21) à commande pilote magnétique par vanne pilote, un aimant associé (22) étant maintenu par un support d'aimant (23) présentant une surface de butée (23a) pour l'organe d'actionnement.

7. Dispositif de vanne à fermeture automatique selon l'une des revendications 1 à 6,
**caractérisé en outre en ce que**
- il comprend une unité de mélange de fluides (20) conçue pour former un fluide mixte en mélangeant deux fluides alimentés séparément dans un rapport de mélange réglable, et pour distribuer le fluide mixte, et
- l'unité d'actionnement de vanne comprend une unité de commande de mélange (24) actionnée par l'utilisateur pour régler le rapport de mélange.

8. Dispositif de vanne à fermeture automatique selon la revendication 7,
**caractérisé en outre en ce que**
- l'unité de mélange de fluides comprend un corps de mélange de vanne (11) mobile en rotation, et
- l'unité de commande de mélange comprend un élément de commande (28) mobile en rotation, qui est couplé solidairement en rotation au corps de mélange de vanne mobile en rotation.
